# EUROPEAN PATENT SPECIFICATION

(11) **EP 3 528 431 B1**
(45) Date of publication and mention of the grant of the patent: **01.11.2023**
(21) Application number: 17860932.7
(22) Date of filing: 29.09.2017
(51) Int. Cl.: H04L 9/40, H04L 9/00, H04L 9/32, H04L 41/082, H04L 65/40

(54) **PAXOS PROTOCOL-BASED METHODS AND APPARATUSES FOR ONLINE CAPACITY EXPANSION OF DISTRIBUTED CONSISTENCY SYSTEM**
PAXOS-PROTOKOLLBASIERTE VERFAHREN UND VORRICHTUNGEN ZUR ONLINE-KAPAZITÄTSERWEITERUNG DES VERTEILTEN KONSISTENZSYSTEMS
PROCÉDÉS ET APPAREILS À PROTOCOLE PAXOS POUR AUGMENTATION DE CAPACITÉ EN LIGNE D'UN SYSTÈME DE COHÉRENCE DISTRIBUÉ

(30) Priority: 11.10.2016 CN 201610888948
(43) Date of publication of application: 21.08.2019
(73) Proprietor: Alibaba Group Holding Limited, Grand Cayman (KY)
(72) Inventor: ZHU, Yunfeng, Hangzhou Zhejiang 311121 (CN); TAO, Yunfeng, Hangzhou Zhejiang 311121 (CN); LU, Yijun, Hangzhou Zhejiang 311121 (CN)
(74) Representative: Finnegan Europe LLP
(86) International application number: PCT/CN2017/104189
(87) International publication number: WO 2018/068661

(56) References cited:
- CN-A- 103 248 656
- CN-A- 103 294 701
- CN-A- 103 634 375
- CN-A- 104 156 367
- CN-A- 104 486 319
- US-A1- 2013 111 261
- Diego Ongaro ET AL: "In Search of an Understandable Consensus Algorithm (Extended Version)", , 20 May 2014 (2014-05-20), XP055468579, Retrieved from the Internet: URL:https://raft.github.io/raft.pdf [retrieved on 2018-04-19]
- Diego Ongaro: "CONSENSUS: BRIDGING THEORY AND PRACTICE", , 1 August 2014 (2014-08-01), XP055616493, Retrieved from the Internet: URL:https://web.stanford.edu/~ouster/cgi-b in/papers/OngaroPhD.pdf [retrieved on 2019-08-29]
- AILIJIANG AILIDANI ET AL: "Consensus in the Cloud: Paxos Systems Demystified", 2016 25TH INTERNATIONAL CONFERENCE ON COMPUTER COMMUNICATION AND NETWORKS (ICCCN), IEEE, 1 August 2016 (2016-08-01), pages 1-10, XP032960993, DOI: 10.1109/ICCCN.2016.7568499 [retrieved on 2016-09-14]
- JUNQUEIRA F P ET AL: "Zab: High-performance broadcast for primary-backup systems", DEPENDABLE SYSTEMS&NETWORKS (DSN), 2011 IEEE/IFIP 41ST INTERNATIONAL CONFERENCE ON, IEEE, 27 June 2011 (2011-06-27), pages 245-256, XP032188018, DOI: 10.1109/DSN.2011.5958223 ISBN: 978-1-4244-9232-9

## Description

This application claims priority to Chinese Patent Application No. 201610888948.4 filed on October 11, 2016 and entitled "ONLINE CAPACITY-EXPANDING AND ONLINE CAPACITY-REDUCING METHODS AND APPARATUSES FOR PAXOS PROTOCOL-BASED DISTRIBUTED CONSENSUS SYSTEM,".

### Technical Field

This application relates to the field of distributed computing technologies, and in particular, to an online capacity-expanding method and apparatus for a Paxos protocol-based distributed consensus system. This application also relates to an online capacity-reducing method and apparatus for a Paxos protocol-based distributed consensus system.

### Background Art

In a large-scale distributed scenario, client processes distributed on a huge number of computing nodes generally need to synchronize access to a shared resource relying on the exclusiveness provided by a back-end distributed consensus system, thus preventing mutual interference to ensure distributed consensus of data. There are a huge number of client processes using distributed consensus services in a large-scale distributed computing system. With the rapid expansion of service scale, thousands of or even more client processes will establish a large number of connections with the back-end distributed consensus system, and consequent frequent access requires a high capacity-expanding capability of the distributed consensus system.

At present, mainstream distributed consensus systems in the field, such as ZooKeeper of Yahoo and Chubby of Google, are all designed based on the classical Paxos protocol. A common capacity-expanding method for a distributed consensus system implemented based on a Paxos protocol without changing the protocol is the so-called "cold" capacity-expanding, that is, services of the distributed consensus system will be interrupted in the capacity-expanding process. The specific cold capacity-expanding procedure includes: stopping service processes of all servers of an original Quorum; adding new servers to a new Quorum; updating new Quorum-related configuration information on all new Quorum servers including the newly added servers; and restarting service processes of all new Quorum servers and resuming distributed consensus services. The conventional cold capacity-expanding mechanism suspends system services, thus greatly affecting user experience of users of distributed consensus services. In addition, the newly added Quorum servers can start to serve user requests only after spending a long period of time in synchronizing all data with the Leader, greatly deferring the service performance improvement on the distributed consensus system caused by the capacity expansion. The prior art is known from "In Search of an Understandable Consensus Algorithm" by Diego Ongaro and John Ousterhout which deals with the consensus algorithm Raft, which separates the key elements of consensus, such as leader election, log replication, and safety, and which includes a mechanism for changing a cluster membership.

### Summary of the Invention

This application provides an online capacity-expanding method and apparatus for a Paxos protocol-based distributed consensus system, to solve the problem of the existing cold capacity-expanding method that distributed system services are suspended in the capacity-expanding process. This application also provides an online capacity-reducing method and apparatus for a Paxos protocol-based distributed consensus system.

This application provides an online capacity-expanding method for a Paxos protocol-based distributed consensus system, including:
adding a set number of new servers on the basis of original servers in an original Quorum;
performing a capacity-expanding operation on one of the new servers, wherein the capacity-expanding operation includes the following steps: stopping a service process related to distributed services; updating maintained configuration information of the original Quorum to configuration information of the capacity-expanded Quorum in which the set number of new servers are added; and starting the service process and initiating Leader election for the capacity-expanded Quorum;
performing, based on an optimal ranking of servers for electing the Leader of the original Quorum, the capacity-expanding operation sequentially on each of the original servers other than the one serving as the Leader of the original Quorum, and after that, performing the capacity-expanding operation on the original server serving as the Leader of the original Quorum; and
performing the capacity-expanding operation on the new server which has not been subjected to the capacity-expanding operation after completion of the capacity-expanding operation for the original servers,
wherein the step of performing, based on an optimal ranking of servers for electing the Leader of the original Quorum, the capacity-expanding operation sequentially on each of the original servers other than the one serving as the Leader of the original Quorum that has not been subjected to the capacity-expanding operation and performing the capacity-expanding operation on the original server serving as the Leader of the original Quorum comprises:
   determining the optimal ranking of servers for electing the Leader of the original Quorum currently, and performing the capacity-expanding operation on the original server, other than the Leader of the original Quorum, which has not been subj ected to the capacity-expanding operation and is at the bottom in the optimal ranking of the servers; and
   judging whether the number of the original servers which have not been subjected to the capacity-expanding operation is more than two; if yes, returning to perform the step of determining an optimal ranking of servers for electing the Leader of the original Quorum currently, and performing the capacity-expanding operation on the original server, other than the Leader of the original Quorum, which has not been subjected to the capacity-expanding operation and is at the bottom in the optimal ranking of the servers; and if no, performing the capacity-expanding operation on the original server which has not been subjected to the capacity-expanding operation.

Optionally, the number of the original servers is an odd number.

Optionally, the set number is two.

Optionally, the configuration information of the Quorum includes: information that is maintained by the servers in the Quorum and enables the servers in the Quorum to know each other and communicate regarding votes to elect the Leader.

Optionally, the optimal ranking of servers for electing the Leader of the original Quorum includes:
ranking in a top-to-bottom order from the most Leader-qualified server to the least Leader-qualified server according to a Leader election strategy of the original Quorum.

Optionally, the step of ranking in a top-to-bottom order from the most Leader-qualified server to the least Leader-qualified server according to a Leader election strategy of the original Quorum includes:
ranking the original server having a larger Zxid value higher among the optimal server ranking for electing the Leader of the original Quorum.

Optionally, the step of ranking in a top-to-bottom order from the most Leader-qualified server to the least Leader-qualified server according to a Leader election strategy of the original Quorum includes:
if the original servers have the same Zxid value, ranking the original server having a smaller MyId value higher among the optimal server ranking for electing the Leader of the original Quorum.

Optionally, the following step is performed for the new server before the step of starting the service process and initiating Leader election for the capacity-expanded Quorum:
selecting any of the original servers, copying data of current persistent storage and transaction logs on the selected original server, and loading the copied data to a local memory database.

This application also provides an online capacity-expanding apparatus for a Paxos protocol-based distributed consensus system, including:
a new server adding unit configured to add a set number of new servers on the basis of original servers in an original Quorum;
a capacity-expanding unit for a new server configured to trigger a capacity-expanding operation unit for one of the new server, wherein the capacity-expanding operation unit includes: a service process stopping unit configured to stop a service process related to distributed services; a Quorum configuration information updating unit configured to update maintained configuration information of the original Quorum to configuration information of the capacity-expanded Quorum in which the set number of new servers are added; and a service process starting unit configured to start the service process and initiate Leader election for the capacity-expanded Quorum;
a capacity-expanding unit for an original server configured to trigger, based on an optimal ranking of servers for electing the Leader of the original Quorum, the capacity-expanding operation unit sequentially for each of the original servers other than the one serving as the Leader of the original Quorum, and after that, trigger the capacity-expanding operation unit for the original server serving as the Leader of the original Quorum; and
a capacity-expanding unit for a non-capacity-expanded new server configured to trigger the capacity-expanding operation unit for the new servers which have not been subjected to the capacity-expanding operation after the capacity-expanding unit is triggered for the original servers,
wherein the capacity-expanding unit for an original server comprises:
   a capacity-expanding unit for an optimally-ranked non-Leader server configured to determine an optimal ranking of servers for electing the Leader of the original Quorum currently, and trigger the capacity-expanding operation unit for the original server, other than the Leader of the original Quorum, which has not been subjected to the capacity-expanding operation and is at the bottom in the optimal ranking of the servers; and
   a capacity-expanding unit for an optimally-ranked Leader server configured to judge whether the number of the original servers which have not been subjected to the capacity-expanding operation is more than two; if yes, return to trigger the capacity-expanding unit for an optimally-ranked non-Leader server; and if no, trigger the capacity-expanding operation unit for the original server which has not been subjected to the capacity-expanding operation.

Optionally, the triggering the capacity-expanding operation unit for the new server includes:
Triggering the following unit before the service process starting unit is triggered:
   a new server consensus data loading unit configured to select any of the original servers, copy data of current persistent storage and transaction logs on the selected original Quorum server, and load the copied data to a local memory database.

This application further provides an online capacity-expanding electronic device for a Paxos protocol-based distributed consensus system, including: a display, a processor, and a memory, wherein the memory is configured to store a program of an online capacity-expanding method for a distributed consensus system, wherein the program performs the following operations when being read and executed by the processor: adding a set number of new servers on the basis of original servers in an original Quorum; performing a capacity-expanding operation on one of the new servers, wherein the capacity-expanding operation includes the following steps: stopping a service process related to distributed services, updating maintained configuration information of the original Quorum to configuration information of the capacity-expanded Quorum in which the set number of new servers are added; and starting the service process and initiating Leader election for the capacity-expanded Quorum; performing, based on an optimal ranking of servers for electing the Leader of the original Quorum, the capacity-expanding operation sequentially on each of the original servers other than the one serving as the Leader of the original Quorum, and after that, performing a capacity-expanding operation on the original server serving as the Leader of the original Quorum; and performing a capacity-expanding operation on the new server which has not been subjected to the capacity-expanding operation after completion of the capacity-expanding operation for the original servers, wherein the step of performing, based on an optimal ranking of servers for electing the Leader of the original Quorum, the capacity-expanding operation sequentially on each of the original servers other than the one serving as the Leader of the original Quorum that has not been subjected to the capacity-expanding operation and performing the capacity-expanding operation on the original server serving as the Leader of the original Quorum comprises: determining the optimal ranking of servers for electing the Leader of the original Quorum currently, and performing the capacity-expanding operation on the original server, other than the Leader of the original Quorum, which has not been subjected to the capacity-expanding operation and is at the bottom in the optimal ranking of the servers; and judging whether the number of the original servers which have not been subj ected to the capacity-expanding operation is more than two; if yes, returning to perform the step of determining an optimal ranking of servers for electing the Leader of the original Quorum currently, and performing the capacity-expanding operation on the original server, other than the Leader of the original Quorum, which has not been subjected to the capacity-expanding operation and is at the bottom in the optimal ranking of the servers; and if no, performing the capacity-expanding operation on the original server which has not been subjected to the capacity-expanding operation.

Compared with the prior art, this application has the following advantages:
A rapid and reliable capacity-expanding method for a distributed consensus system is provided in this application, and online capacity expansion is performed without interrupting services, thus greatly improving user experience of users of distributed consensus services during the capacity expanding process.

In this application, the existence of the original Quorum is maintained as much as possible during the capacity expanding process, a least Leader-qualified server is selected from the servers of the original Quorum in the capacity-expanding sequence for capacity expansion, and finally the capacity of another newly added Quorum server is expanded. As a result, it is ensured that the capacity of the elected Leader has not been expanded even if server node failures occur during the capacity expanding process, thus implementing fault-tolerance on the server node failures during the capacity expanding process without affecting the distributed consensus services.

According to the solutions of this application, persistently stored snapshots and transaction logs in the original Quorum are used, and the time for the newly added Quorum servers to synchronize data with the Leader after the capacity expansion is greatly shortened, thus allowing the rapid capacity expansion of the distributed consensus system.

### Brief Description of the Drawings

FIG. 1 is a schematic diagram of a Paxos protocol-based distributed consensus system according to an embodiment of this application;
FIG. 2 is a flowchart of an embodiment of an online capacity-expanding method for a Paxos protocol-based distributed consensus system according to this application;
FIG. 3 is a first schematic diagram of an embodiment of an online capacity-expanding method for a Paxos protocol-based distributed consensus system according to this application;
FIG. 4 is a flowchart of a capacity-expanding method in an embodiment of an online capacity-expanding method for a Paxos protocol-based distributed consensus system according to this application;
FIG. 5 is a second schematic diagram of an embodiment of an online capacity-expanding method for a Paxos protocol-based distributed consensus system according to this application;
FIG. 6 is a third schematic diagram of an embodiment of an online capacity-expanding method for a Paxos protocol-based distributed consensus system according to this application;
FIG. 7 is a fourth schematic diagram of an embodiment of an online capacity-expanding method for a Paxos protocol-based distributed consensus system according to this application;
FIG. 8 is a fifth schematic diagram of an embodiment of an online capacity-expanding method for a Paxos protocol-based distributed consensus system according to this application;
FIG. 9 is a flowchart of a preferred embodiment of an online capacity-expanding method for a Paxos protocol-based distributed consensus system according to this application;
FIG. 10 is a flowchart of a preferred embodiment of a capacity-expanding method in an online capacity-expanding method for a Paxos protocol-based distributed consensus system according to this application;
FIG. 11 is a schematic diagram of an embodiment of an online capacity-expanding apparatus for a Paxos protocol-based distributed consensus system according to this application;
FIG. 12 is a schematic diagram of an embodiment of a capacity-expanding apparatus in an online capacity-expanding apparatus for a Paxos protocol-based distributed consensus system according to this application;
FIG. 13 is a schematic diagram of a preferred embodiment of an online capacity-expanding apparatus for a Paxos protocol-based distributed consensus system according to this application;
FIG. 14 is a schematic diagram of a preferred embodiment of a capacity-expanding apparatus in an online capacity-expanding apparatus for a Paxos protocol-based distributed consensus system according to this application;
FIG. 15 is a schematic diagram of an embodiment of an online capacity-expanding electronic device for a Paxos protocol-based distributed consensus system according to this application;
FIG. 16 is a flowchart of an online capacity-reducing method for a Paxos protocol-based distributed consensus system according to this application;
FIG. 17 is a first schematic diagram of an embodiment of an online capacity-reducing method for a Paxos protocol-based distributed consensus system according to this application;
FIG. 18 is a second schematic diagram of an embodiment of an online capacity-reducing method for a Paxos protocol-based distributed consensus system according to this application;
FIG. 19 is a third schematic diagram of an embodiment of an online capacity-reducing method for a Paxos protocol-based distributed consensus system according to this application; and
FIG. 20 is a schematic diagram of an online capacity-reducing apparatus for a Paxos protocol-based distributed consensus system according to this application.

### Detailed Description

Many specific details are described in the following description to facilitate thorough understanding of this application. However, this application can be implemented in many other manners different from that described herein, and those skilled in the art may make similar generalization without departing from the essence of this application. Therefore, this application is not limited by specific implementations disclosed below.

An online capacity-expanding method, apparatus and electronic device for a Paxos protocol-based distributed consensus system, as well as an online capacity-reducing method and apparatus for a Paxos protocol-based distributed consensus system are provided in this application. Embodiments of this application are described below in detail sequentially with reference to the accompanying drawings. In order to facilitate understanding the technical solutions of this application, some relevant technical terms in the technical solutions of this application and a distributed consensus system implemented based on the Paxos theory are illustrated in brief first.

The Paxos protocol is a message transmission-based consensus algorithm proposed by Leslie Lamport and solves the problem of how to achieve consensus of a certain value (decision) in a distributed system. Explanations of some terms of the Paxos protocol-based distributed consensus system are provided below:
Quorum: The Quorum is a set of servers at a server end of a distributed consensus system, and the number of servers is generally an odd number; each server maintains a memory database of the distributed consensus system and persistently stored transaction logs and snapshot data;
Leader: The Leader is the only master server in a Quorum that is elected by at least more than half of servers in the Quorum and is responsible for providing Proposals of all transaction operations, such as write operation, that change the state of the consensus system, and synchronizing data to other servers in response to requests of the servers;
Follower: The Follower is a slave server in a Quorum that directly responds to a user's non-transaction operation such as read operation, forwards a user's transaction operation such as write operation to the Leader for processing, receives a Proposal from the Leader, correspondingly updates local transaction logs and snapshots, and modifies the state of a memory database;
Zxid: The Zxid is Id information for marking a transaction sequence in the distributed consensus system; and
MyId: The MyId is Id information for marking each server in the Quorum.

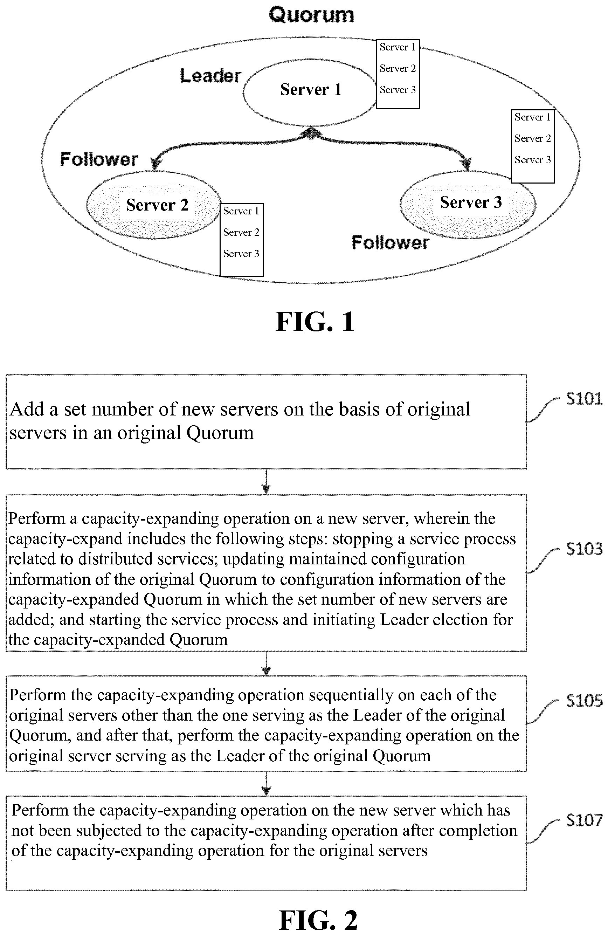

Generally, a server group referred to as Quorum at the server end of the distributed consensus system implemented based on the Paxos theory guarantees the distributed consensus of data. As shown in FIG. 1, a Quorum generally consists of an odd number of servers, and each server will maintain a memory database of the distributed consensus system and persistently stored snapshots and transaction logs. When the distributed consensus system starts, the Quorum will select a server as the Leader according to Zxid and MyId information currently recorded by each Quorum server, and other servers serve as Followers. In fact, the Leader can be elected by more than one half of the servers. The Leader of the Quorum is responsible for providing Proposals of all transaction operations, such as write operations, that change the state of the system, and synchronizing data to the Follower servers in response to requests from the Followers. Each Follower of the Quorum directly responds to a user's non-transaction operation such as read operation, forwards a user's transaction operation such as write operation to the Leader for processing, receives a Proposal from the Leader, correspondingly updates local transaction logs and snapshots, and modifies the state of a memory database.

Each Quorum server in the distributed consensus system maintains configuration related to information of the Quorum where the server is located. The configuration can allow all servers in the Quorum to know each other, such that the servers can broadcast their votes during Leader election, thus ensuring a normal Leader election of the Quorum. FIG. 1 shows a Quorum including 3 servers, wherein Server 1 is the Leader of the Quorum.

In addition, a Quorum Leader election strategy related to the distributed consensus system must be illustrated. In fact, a vote of each server in the Quorum includes two factors: 1) current Zxid information of the server; and 2) MyId information of the server. During the election, the Zxid information is compared first. If a server has the largest Zxid value, the server is the most qualified as the Leader. Next, if the servers have the same Zxid value, unique MyId values of the servers are compared to elect the Leader. MyId value comparison rules are different in different distributed consensus systems, and the election strategy only needs to ensure that the comparison rule is clear and unambiguous. In this application, for ease of description, the comparison rule is that the server having a smaller MyId value is more qualified to elect the Leader; moreover, <Zxid, MyId> is used to mark a vote of each server for electing the Leader.

The technical solutions of this application are illustrated below with reference to specific procedures of embodiments.

Referring to FIG. 2, a flowchart of an embodiment of an online capacity-expanding method for a Paxos protocol-based distributed consensus system according to this application is shown. Specifically, the online capacity-expanding method includes the following steps:
Step S101: A set number of new servers are added on the basis of original servers in an original Quorum.

This step is a necessary physical preparation for expanding the capacity of the original Quorum and adding new servers. A set number of new servers are added on the basis of the original Quorum servers that operate normally, that is, servers having normal service capabilities of Quorum servers are physically added to the original Quorum and preparations such as networking the servers to the original servers in the original Quorum and work stations of client terminals are made.

Generally, the number of original Quorum servers is an odd number in consideration of electing the Leader. The online capacity-expanding method provided in this application is adjacent capacity expansion, that is, two new servers are added to the original Quorum in one capacity expansion. As such, after the capacity-expanding method of this application is performed, the number of servers in the capacity-expanded Quorum is still an odd number. For ease of description, in the following specific capacity-expanding embodiments of this application, the original Quorum before the capacity expansion is uniformly marked as Q₂ₙ₊₁ and the Quorum after the capacity-expanding is uniformly marked as Q₂ₙ₊₃.

Definitely, this application is also applicable to spanned capacity expansion, as long as the adjacent capacity-expanding method is continuously and separately performed multiple times, and two new servers can be added to the Quorum during each capacity expansion. The details are not illustrated in each specific capacity-expanding embodiment of this application.

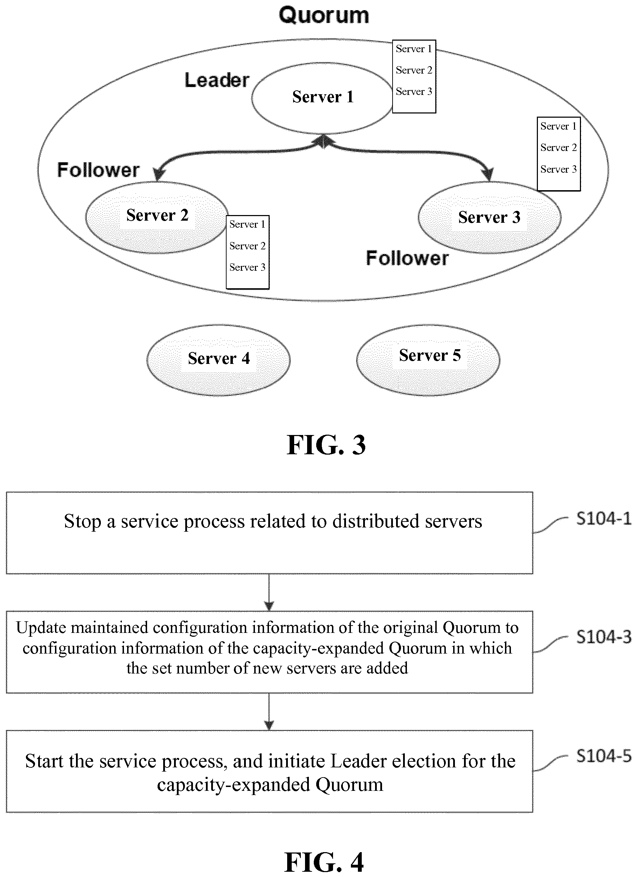

For example, as shown in FIG. 3, in this embodiment, the original Quorum, i.e., Q₂ₙ₊₁, has 3 servers, namely, Server 1, Server 2, and Server 3. This capacity-expanding method can be used to add two new servers, i.e., Server 4 and Server 5. The capacity-expanded Quorum, i.e., Q₂ₙ₊₃, will have 5 servers.

Step S103: a capacity-expanding operation is performed on one of the new servers, wherein the capacity-expanding operation includes the following steps: stopping a service process related to distributed services; updating maintained configuration information of the original Quorum to configuration information of the capacity-expanded Quorum in which the set number of new servers are added; and starting the service process and initiating Leader election for the capacity-expanded Quorum.

In this application, a new server is selected at first, and then then capacity-expanding operation is performed thereon, i.e., three main capacity-expanding steps: stopping a service process; updating Quorum configuration information; and restarting the service process and initiating Leader election for the capacity-expanded Quorum to all other servers.

The original Quorum has 2n+1 servers, and the Leader can be elected by n+1 servers among them. The capacity-expanded Quorum has 2n+3 servers, and the Leader can be elected by n+2 servers among them. Therefore, if there are 2n+3 servers in a transition process of the system capacity expansion, there may be a risk of "split brain," i.e., two elected Leaders respectively belonging to the original Quorum and the capacity-expanded Quorum, which will eventually lead to a fatal result of data inconsistency. The last capacity-expanded one must be a new server to break down the necessary condition for causing the risk of "split brain." This application uses a capacity-expanding order in which the capacity-expanding operation is performed on a new server first, then the capacity-expanding operation is performed on the original servers, and finally the capacity-expanding operation is performed on the new server which has not been subjected to the capacity-expanding operation.

As shown in FIG. 4, the capacity-expanding operation in S104 includes the following steps:
Step S 104-1: A service process related to distributed servers is stopped.
Step S104-3: Maintained configuration information of the original Quorum is updated to configuration information of the capacity-expanded Quorum in which the set number of new servers are added.
Step S104-5: The service process is started, and Leader election for the capacity-expanded Quorum is initiated.

The capacity-expanding operation is performed on the new server and the original server, i.e., S104 is performed for the new server or the original server: if the server has an operating service process related to distributed services, the service process is stopped; configuration information of the Quorum maintained by the server is updated to configuration information of the capacity-expanded Quorum including the original servers and the two new servers; and the service process of the server is restarted to provide the distributed services again, and the service process initiates Leader election for the capacity-expanded Quorum.

In this embodiment, after the capacity-expanding operation is performed on a new server, the capacity-expanded new server will maintain configuration information of the capacity-expanded Quorum including all the original servers and the two new servers. All the original servers in the original Quorum do not know the new servers, and therefore, votes of the new servers for electing the Leader will be neglected, the Leader of the original Quorum still keeps its position, and the service processes of the new servers will be in a state of continuously initiating election.

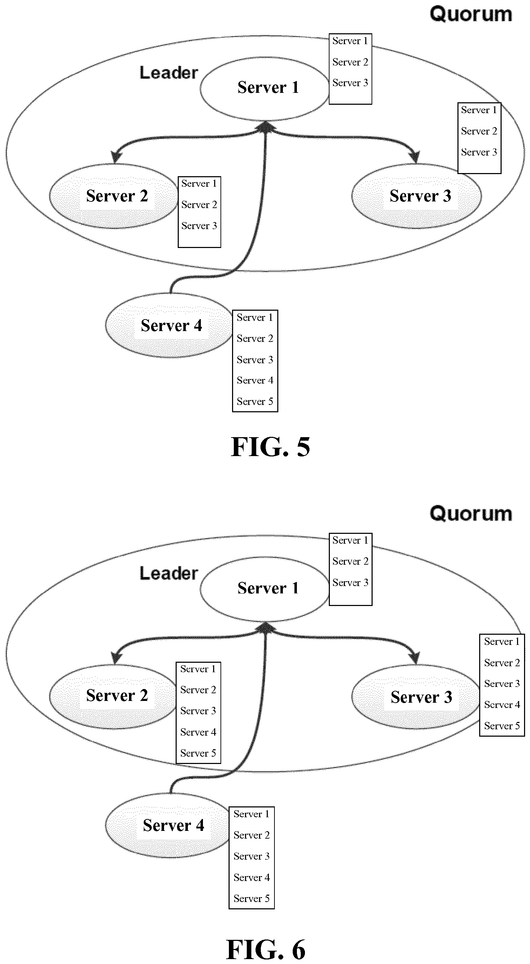

For example, as shown in FIG. 5, after the capacity-expanding operation is performed on a new server, the Quorum configuration information of the newly added server, i.e., Server 4, includes the original servers 1 to 3 and the two new servers 4 and 5. Other original servers will neglect a vote of the Server 4 for electing the Leader, and the Server 4 cannot be added to the original Quorum and is in a state of continuously initiating election for the Leader of the capacity-expanded Quorum.

Step S105: the capacity-expanding operation is performed sequentially on each of the original servers other than the one serving as the Leader of the original Quorum, and after that, the capacity-expanding operation is performed on the original server serving as the Leader of the original Quorum.

The capacity-expanding operation is performed on one of the original servers which have not been subjected to the capacity-expanding operation other than the Leader of the original Quorum, i.e., a Follower in the original Quorum which has not been subjected to the capacity-expanding operation, until the capacity-expanding operation is performed on all the original servers other than the Leader of the original Quorum.

When the capacity-expanding operation is performed on the original server other than the Leader of the original Quorum, the service process of the original server is stopped, Q₂ₙ₊₁ configuration information of the server is modified to Q₂ₙ₊₃ configuration information, and the server process is restarted. However, the initiated Leader election for the capacity-expanded Quorum will be neglected as there is a Leader in the remaining original servers, and the Leader and the non-Leader original server with the capacity expanded know each other; therefore, the server with the capacity expanded will still be added to the original Quorum to continue providing distributed consensus services.

For example, as shown in FIG. 6, after the capacity-expanding operation is performed on the original servers, i.e., the Server 2 and the Server 3, other than the Leader, i.e., the Server 1, of the original Quorum one by one, the Server 2 and the Server 3 will be added to the original Quorum, and start to maintain configuration information of the capacity-expanded Quorum.

After completion of the capacity-expanding operation for all the original servers other than the Leader of the original Quorum, the capacity-expanding operation is performed on the Leader of the original Quorum.

After the step of stopping the service process in the capacity-expanding process of the Leader of the original Quorum, the original server will make re-election if not finding the Leader. In this case, all other original servers know a new server with the capacity expanded. All the other original servers and the new server with the capacity expanded meet the condition of electing the Leader of the capacity-expanded Quorum by more than half of the servers, thus electing the Leader of the capacity-expanded Quorum and adding the Leader to the capacity-expanded Quorum. After updating configuration information of the capacity-expanded Quorum, restarting the service process and initiating Leader election for the capacity-expanded Quorum, the Leader of the original Quorum will be directly added to the capacity-expanded Quorum in which the Leader has been elected.

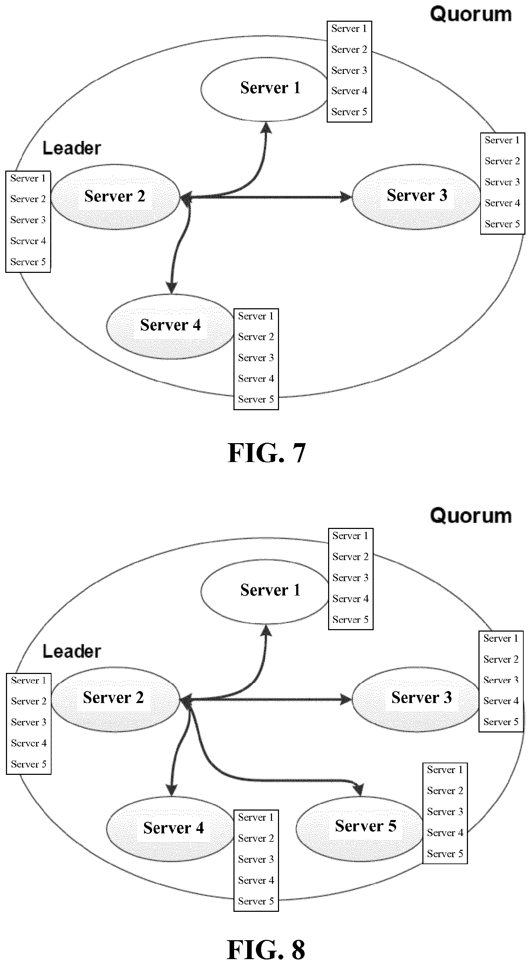

For example, as shown in FIG. 7, the capacity-expanding operation is performed on the Leader of the original Quorum, i.e., the Server 1. After the Server 1 stops a service process thereof, the Servers 1 to 4 will elect the Leader for the capacity-expanded Quorum. In this case, it is assumed that the elected new Leader is the Server 2. After the Server 1 restarts the service process thereof, the Server 1 will be added to the capacity-expanded Quorum5 and become a Follower of the capacity-expanded Quorum.

Step S107: the capacity-expanding operation is performed on the new server which has not been subjected to the capacity-expanding operation after completion of the capacity-expanding operation for the original servers.

The capacity-expanding operation is performed on the remaining new server which has not been subjected to the capacity-expanding operation. The capacity-expanded new server will know all other servers in the capacity-expanded Quorum, and after initiating Leader election for the capacity-expanded Quorum, the new server will be added to the capacity-expanded Quorum, accept the existing Leader, and start to provide distributed consensus services.

For example, as shown in FIG. 8, after the capacity-expanding operation is performed on the other new server, i.e., the Server 5, the Server 5 will find that there has been a Leader in the capacity-expanded Quorum after initiating Leader election for the capacity-expanded Quorum, and the Server 5 will be added to the capacity-expanded Quorum, accept the existing Leader, i.e., the Server 2, and start to provide distributed consensus services as a Follower of the capacity-expanded Quorum.

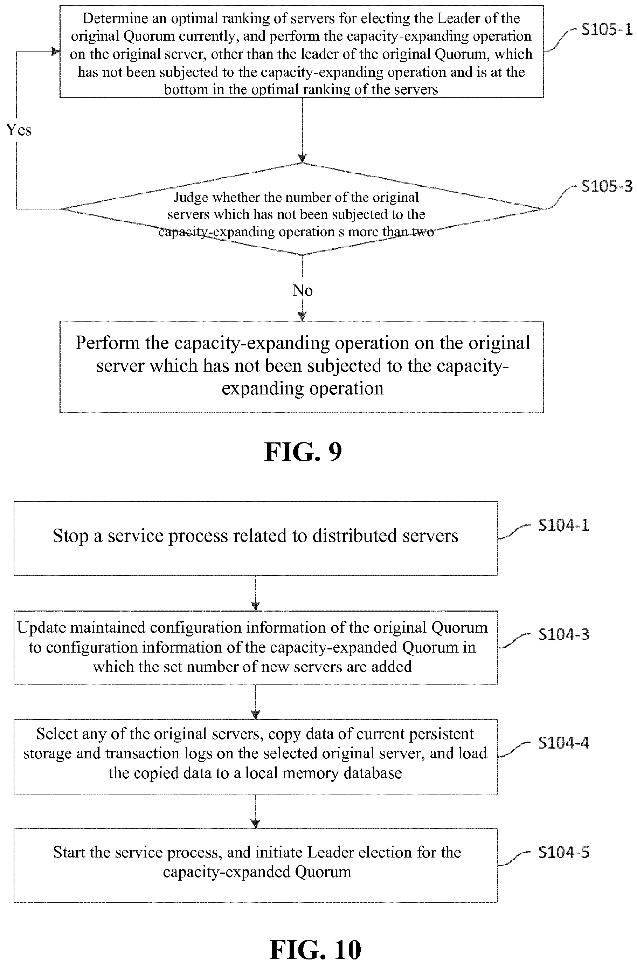

Referring to FIG. 9, a flowchart of a preferred embodiment of an online capacity-expanding method for a Paxos protocol-based distributed consensus system according to this application is shown. Step S105 of the online capacity-expanding method includes:
Step S105-1: An optimal ranking of servers for electing the Leader of the original Quorum currently is determined, and the capacity-expanding operation is performed on the original server, other than the leader of the original Quorum, which has not been subjected to the capacity-expanding operation and is at the bottom in the optimal ranking of the servers.
Step S105-3: It is judged whether the number of the original servers which have not been subjected to the capacity-expanding operation is more than two; if yes, the procedure returns to perform the step of determining an optimal ranking of servers for electing the Leader of the original Quorum currently, and performing the capacity-expanding operation on the original server, other than the leader of the original Quorum, which has not been subjected to the capacity-expanding operation and is at the bottom in the optimal ranking of the servers; and if no, the capacity-expanding operation is performed on the original server which has not been subjected to the capacity-expanding operation.

The above two steps S105-1 and S105-2 are the preferred solution of the step S105. In the capacity-expanding process of the original servers, the capacity-expanding operation is performed on the server that ranks at the bottom and has the least possibility of becoming the Leader preferentially according to a Leader election strategy of the Quorum during each capacity expansion, and as a result, it can be ensured that the newly elected Leader is a server belonging to the original Quorum even if there is a node failure in the Quorum in the capacity-expanding process, thus improving distributed consensus which keeps providing normal operation as much as possible.

In this application, the existence of the original Quorum needs to be maintained as much as possible for the capacity-expanding order of the original servers. That is, during each capacity expansion on the original server, the server at the bottom of the optimal ranking of servers for electing the Leader of the original Quorum must be selected. The optimal server ranking for electing the Leader of the original Quorum includes: ranking in a top-to-bottom order from the most Leader-qualified server to the least Leader-qualified server according to a Leader election strategy of the original Quorum.

In this embodiment, the step of ranking in a top-to-bottom order from the most Leader-qualified server to the least Leader-qualified server according to a Leader election strategy of the original Quorum includes: ranking the original server having a larger Zxid value higher among the optimal server ranking for electing the Leader of the original Quorum; and if the original servers have the same Zxid value, ranking the original server having a smaller MyId value higher among the optimal server ranking for electing the Leader of the original Quorum.

Therefore, in the capacity-expanding process of the original servers, the server at the bottom of the optimal ranking of the servers for electing the Leader of the original Quorum, i.e., the server currently having the lowest vote <Zxid, MyId> for the Leader election is selected for capacity expansion each time from the original servers which have not been subjected to the capacity-expanding operation. As such, it can be ensured that the original server having the optimal vote <Zxid, MyId> for the Leader election must be the original server which has not been subjected to the capacity-expanding operation, even if a node failure occurs in the capacity-expanding process. In other words, a Leader can be elected for the original Quorum as long as there are still n+1 original servers, and therefore, the distributed consensus services of users will not be affected.

For example, as shown in FIG. 5 and FIG. 6, when the capacity of the original server is - expanded, the Server 3 has the then lowest vote <Zxid, MyId> for the Leader election among the original servers. Therefore, the capacity-expanding operation is performed on the Server 3 first, the service process is restarted, and the Server 3 will still be added to the original Quorum and continue providing the distributed consensus services. Then, according to the rule, the capacity-expanding operation is performed on the Server 2 having the then lowest vote <Zxid, MyId> for the Leader election, and the Server 2 will still be added to the original Quorum after restarting the service process. The capacity expansion is continued until the capacity-expanding operation has been performed on all other non-Leader original servers, and when there is only one original server, i.e., the original Leader server 1, which has not been subjected to the capacity-expanding operation, and then the capacity-expanding operation is performed on the server 1. The capacity expansion on the original Leader server 1 has been detailed in step S107 and will not be repeated here.

Referring to FIG. 10, a flowchart of a preferred embodiment of a capacity-expanding operation in an online capacity-expanding method for a Paxos protocol-based distributed consensus system according to this application is shown. Before step S104-5 is performed, the capacity-expanding operation in S104 performs the following step:
Step S104-4: Any of the original servers is selected, data of current persistent storage and transaction logs on the selected original server is copied, and the copied data is loaded to a local memory database.

In the capacity-expanding process of the distributed consensus system from Q₂ₙ₊₁ to Q₂ₙ₊₃, after the distributed related service process of the capacity-expanded new server is started, a Zxid of the server is 0, that is, there is no distributed consensus data locally. This means an access request of a user can be served only after all consensus data is synchronized with the Leader. As a result, it directly leads to a long period of time for the capacity-expanded new server to be capable of providing distributed consensus services from starting.

By selecting any of the 2n+1 original servers of the original Quorum and copying the current latest snapshot and the later transaction log data, the new server can load the consensus persistent data to the local memory data when starting the service process thereof. On this basis, when the new server attempts to be added to the original Quorum, the Zxid is very close or even equal to the Zxid of the Leader, thus greatly reducing the data synchronization time for the new server. Definitely, the method of reducing the data synchronization time is not only applicable to the new server that is subjected to the capacity-expanding operation lastly, but also applicable to the new server that is subjected to the capacity-expanding operation firstly.

For example, as shown in FIG. 8, for the capacity expansion on the new server which has not been subjected to the capacity-expanding operation, i.e., the Server 5, it is possible to selectively copy the current latest snapshot and later transaction log data from the original servers, i.e., the Servers 1 to 3, before starting the service process thereof. As such, after the service process thereof is started, the Server 5 can be quickly added to the capacity-expanded Quorum to quickly provide the distributed consensus services to the users.

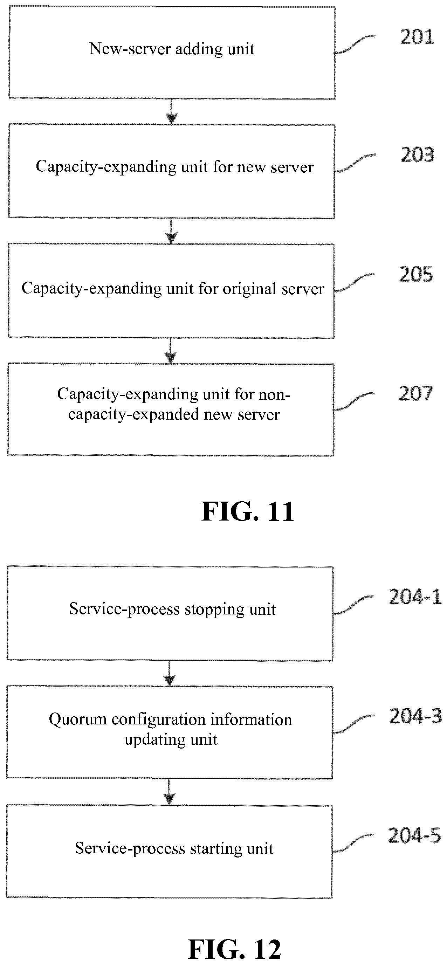

Referring to FIG. 11, a schematic diagram of an embodiment of an online capacity-expanding apparatus for a Paxos protocol-based distributed consensus system according to this application is shown. The apparatus embodiment is basically similar to the method embodiment, and therefore it is described simply. Related parts may be obtained with reference to the descriptions of the parts in the method embodiment. The apparatus embodiment described below is merely schematic. The capacity-expanding apparatus includes:
a new-server adding unit 201 configured to add a set number of new servers on the basis of original servers in an original Quorum;
a capacity-expanding unit 203 for a new server configured to trigger a capacity-expanding operation unit 204 for one of the new server, wherein the capacity-expanding operation unit 204, referring to FIG. 12, includes: a service-process stopping unit 204-1 configured to stop a service process related to distributed services; a Quorum configuration information updating unit 204-3 configured to update maintained configuration information of the original Quorum to configuration information of the capacity-expanded Quorum in which the set number of new servers are added; and a service-process starting unit 204-5 configured to start the service process and initiate Leader election for the capacity-expanded Quorum;
a capacity-expanding unit 205 for an original server configured to trigger the capacity-expanding operation unit sequentially for each of the original servers other than the one serving as the Leader of the original Quorum, and after that, trigger the capacity-expanding operation unit for the original server serving as the Leader of the original Quorum; and
a capacity-expanding unit 207 for a non-capacity-expanded new server configured to trigger the capacity-expanding operation unit for the new server which has not been subjected to the capacity-expanding operation after the capacity-expanding operation unit is triggered for the original servers.

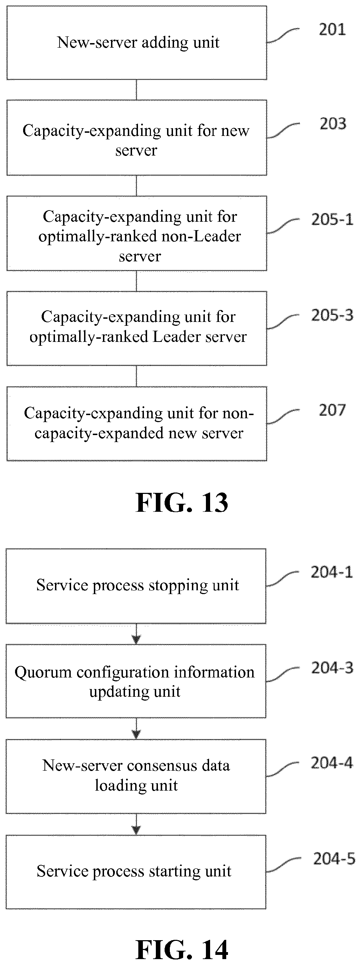

Referring to FIG. 13, a schematic diagram of a preferred embodiment of an online capacity-expanding apparatus for a Paxos protocol-based distributed consensus system according to this application is shown. The capacity-expanding unit 205 for an original server includes:
a capacity-expanding unit 205-1 for an optimally-ranked non-Leader server configured to determine an optimal ranking of servers for electing the Leader of the original Quorum currently, and trigger the capacity-expanding operation unit for the original server, other than the leader of the original Quorum, which has not been subjected to the capacity-expanding operation and is at the bottom in the optimal ranking of the servers; and
a capacity-expanding unit 205-3 for an optimally-ranked Leader server configured to judge whether the number of the original servers which have not been subjected to the capacity-expanding operation is more than two; if yes, return to trigger the capacity-expanding unit for an optimally-ranked non-Leader server; and if no, trigger the capacity-expanding operation unit for the original server which has not been subjected to the capacity-expanding operation.

Referring to FIG. 14, a schematic diagram of a preferred embodiment of an online capacity-expanding apparatus for a Paxos protocol-based distributed consensus system according to this application is shown. The apparatus embodiment is basically similar to the method embodiment, and therefore it is described simply. Related parts may be obtained with reference to the descriptions of the parts in the method embodiment. The apparatus embodiment described below is merely schematic. The triggering the capacity-expanding unit 204 for the new server includes:
triggering the following unit before the service-process starting unit 204-5 is triggered:
a new server consensus data loading unit 204-4 configured to select any of the original servers, copy data of current persistent storage and transaction logs on the selected original Quorum server, and load the copied data to a local memory database.

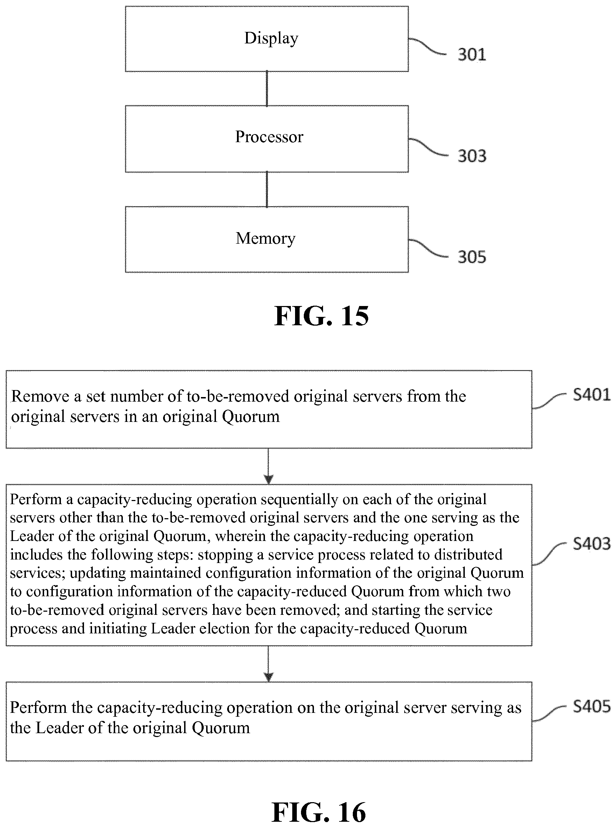

Referring to FIG. 15, a schematic diagram of an embodiment of an online capacity-expanding electronic device for a Paxos protocol-based distributed consensus system according to this application is shown. The electronic device embodiment is basically similar to the method embodiment, and therefore it is described simply. Related parts may be obtained with reference to the descriptions of the parts in the method embodiment. The apparatus embodiment described below is merely schematic. The capacity-expanding electronic device includes: a display 301; a processor 303; and a memory 305.

The memory 305 is configured to store a program of an online capacity-expanding method for a distributed consensus system, wherein the program performs the following operations when being read and executed by the processor: adding a set number of new servers on the basis of original servers in an original Quorum; performing a capacity-expanding operation on one of the new servers, wherein the capacity-expanding operation includes the following steps: stopping a service process related to distributed services, updating maintained configuration information of the original Quorum to configuration information of the capacity-expanded Quorum in which the set number of new servers are added; and starting the service process and initiating Leader election for the capacity-expanded Quorum; performing a capacity-expanding operation sequentially on each of the original servers other than the one serving as the Leader of the original Quorum, and after that, performing a capacity-expanding operation on the original server serving as the Leader of the original Quorum; and performing a capacity-expanding operation on the new server which has not been subjected to the capacity-expanding operation after completion of the capacity-expanding operation for the original servers.

Referring to FIG. 16, a flowchart of an embodiment of an online capacity-reducing method for a Paxos protocol-based distributed consensus system according to this application is shown. Specifically, the online capacity-reducing method includes the following steps:
Step S401: A set number of to-be-removed original servers are removed from the original servers in an original Quorum.

The removing a set number of to-be-removed original servers from the original servers in the original Quorum refers to physically removing the original servers. The online capacity-reducing method provided in this embodiment is adjacent capacity reduction. That is, each time this capacity-reducing method is performed, 2 original servers can be removed from the original Quorum. Definitely, similar to the spanned capacity expansion, the capacity-reducing method of this application is also applicable to spanned capacity reduction, as long as the capacity-reducing method provided in this application is continuously and separately performed several times.

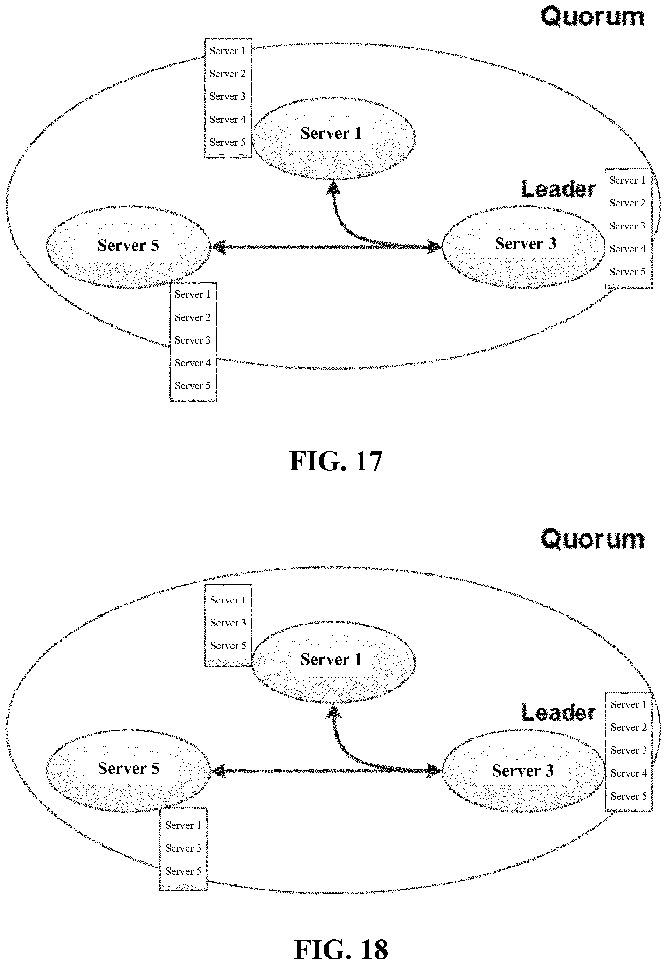

For example, there are servers 1 to 5 in a Quorum before capacity reduction in this embodiment. As shown in FIG. 8, two servers, i.e., Server 2 and Server 4, are removed in this embodiment. The Server 2 is the Leader of the Quorum before the servers are removed. After the Server 2 and the Server 4 are removed, the number of the remaining 3 servers exceeds half of the number, 5, of servers in the original Quorum, and thus a new Leader can be elected for the original Quorum. It is assumed that the Server 3 has the optimal vote <Zxid, MyId> for Leader election among the original servers, the Server 3 is elected as the new Leader, as shown in FIG. 17. In this case, the Server 1, the Server 3, and the Server 5 all maintain configuration information of the Quorum before the capacity-reducing. If the removed server is not the Leader, the Leader election is not needed, and the original Leader still keeps its position as the Leader.

Step S403: a capacity-reducing operation is performed sequentially on each of the original servers other than the to-be-removed original servers and the one serving as the Leader of the original Quorum, wherein the capacity-reducing operation includes the following steps: stopping a service process related to distributed services; updating maintained configuration information of the original Quorum to configuration information of the capacity-reduced Quorum from which two to-be-removed original servers have been removed; and starting the service process and initiating Leader election for the capacity-reduced Quorum.

The capacity-reducing operation is performed on One of the remaining original servers which have not been subjected to capacity expansion other than the Leader, i.e., a Follower which has not been subjected capacity expansion in the original Quorum, until the capacity-reducing operation has been performed on all the original servers other than the Leader of the original Quorum.

The capacity-reducing operation performed on the server refers to stopping the service process thereof, modifying original Quorum configuration information, i.e., Q₂ₙ₊₃, to configuration information, i.e., Q₂ₙ₊₁, of the capacity-reduced Quorum, restarting the server process and initiating Leader election for the capacity-reduced Quorum. However, there is still a Leader for the remaining original servers at this point, the server with the capacity reduced knows the Leader, and will accept the Leader and be added to the original Quorum to continue providing the distributed consensus services.

For example, in this embodiment, as shown in FIG. 18, after the capacity-reducing operation is performed on the non-Leaders Server 1 and Server 5 one by one, the Leader server maintains the configuration information of the original Quorum, and the non-Leader server starts to maintain configuration information of the capacity-reduced Quorum.

Step S405: The capacity-reducing operation is performed on the original server serving as the Leader of the original Quorum.

The capacity-reducing operation is performed on the Leader server maintaining the configuration formation of the original Quorum finally. When the service process of the Leader server is stopped during the capacity-reducing, other non-Leader servers start to elect a Leader that maintains a new capacity-reduced Quorum. After starting the service process and initiating Leader election for the capacity-reduced Quorum, the Leader server maintaining the original Quorum will be added to the capacity-reduced Quorum to become one Follower.

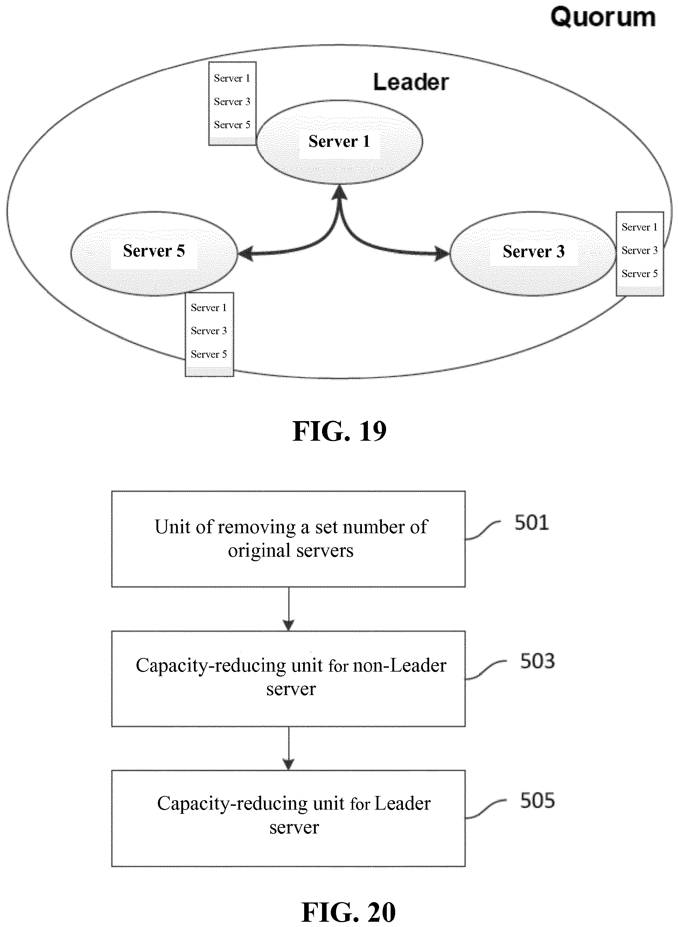

For example, as shown in FIG. 19, after the capacity-reducing operation is performed on the original Leader server 3, it is assumed that the newly elected Leader is the Server 1, and the Server 3 will be added to the capacity-reduced Quorum after updating the Quorum configuration and restarting the service process thereof.

Referring to FIG. 20, a schematic diagram of an embodiment of an online capacity-reducing apparatus for a Paxos protocol-based distributed consensus system according to this application is shown. The apparatus embodiment is basically similar to the method embodiment, and therefore it is described simply. Related parts may be obtained with reference to the descriptions of the parts in the method embodiment. The apparatus embodiment described below is merely schematic. The capacity-reducing apparatus includes:
a unit 501 of removing a set number of original servers configured to remove a set number of to-be-removed original servers from the original servers in an original Quorum;
a capacity-reducing unit 503 of a non-Leader server configured to trigger a capacity-reducing operation unit sequentially for each of the original servers other than the to-be-removed original servers and the one serving as the Leader of the original Quorum, wherein the capacity-reducing operation unit is configured to stop a service process related to distributed services; update maintained configuration information of the original Quorum to configuration information of the capacity-reduced Quorum from which two to-be-removed original servers have been removed; and start the service process and initiate Leader election for the capacity-reduced Quorum; and
a capacity-reducing unit 505 of a Leader server configured to trigger the capacity-reducing operation unit for the original server serving as the Leader of the original Quorum.

This application is disclosed in the preferred embodiments in the foregoing, but they are not intended to limit this application. Any person skilled in the art can make possible variations and modifications without departing from the scope of this application. Therefore, the protection scope of this application should be subject to the scope defined by the claims of this application.

In a typical configuration, a computing device includes one or more processors (CPU), an input/output interface, a network interface, and a memory.

The memory may include a computer readable medium, such as a volatile memory, a random access memory (RAM) and/or a non-volatile memory or the like, for example, a read only memory (ROM) or a flash RAM. The memory is an example of the computer readable medium.
1. The computer readable medium includes non-volatile and volatile media as well as movable and non-movable media and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read only memory (CD-ROM), a digital versatile disc (DVD) or other optical storage, a cassette tape, a magnetic tape/magnetic disk storage or other magnetic storage devices, or any other non-transmission medium, and can be used to store information accessible to the computing device. According to the definition of this text, the computer readable medium does not include transitory media, such as modulated data signals and carriers.
2. Those skilled in the art should understand that the embodiments of this application may be provided as a method, a system, or a computer program product. Therefore, this application may be implemented as a complete hardware embodiment, a complete software embodiment, or an embodiment combining software and hardware. Moreover, this application may be in the form of a computer program product implemented on one or more computer usable storage media (including, but not limited to, a magnetic disk memory, a CD-ROM, an optical memory and the like) including computer usable program codes.

## Claims

1. An online capacity-expanding computer-implemented method for a Paxos protocol-based distributed consensus system, comprising:
adding a set number of new servers on the basis of original servers in an original Quorum;
performing a capacity-expanding operation on one of the new servers, wherein the capacity-expanding operation comprises the following steps: stopping a service process related to distributed services; updating maintained configuration information of the original Quorum to configuration information of the capacity-expanded Quorum in which the set number of new servers are added; and starting the service process and initiating Leader election for the capacity-expanded Quorum;
performing, based on an optimal ranking of servers for electing the Leader of the original Quorum, the capacity-expanding operation sequentially on each of the original servers other than the one serving as the Leader of the original Quorum, and after that, performing the capacity-expanding operation on the original server serving as the Leader of the original Quorum; and
performing the capacity-expanding operation on the new servers which have not been subjected to the capacity-expanding operation after completion of the capacity-expanding for the original servers,
wherein the step of performing, based on an optimal ranking of servers for electing the Leader of the original Quorum, the capacity-expanding operation sequentially on each of the original servers other than the one serving as the Leader of the original Quorum that has not been subjected to the capacity-expanding operation and performing the capacity-expanding operation on the original server serving as the Leader of the original Quorum comprises:
determining the optimal ranking of servers for electing the Leader of the original Quorum currently, and performing the capacity-expanding operation on the original server, other than the Leader of the original Quorum, which has not been subjected to the capacity-expanding operation and is at the bottom in the optimal ranking of the servers; and
judging whether the number of the original servers which have not been subjected to the capacity-expanding operation is more than two; if yes, returning to perform the step of determining an optimal ranking of servers for electing the Leader of the original Quorum currently, and performing the capacity-expanding operation on the original server, other than the Leader of the original Quorum, which has not been subjected to the capacity-expanding operation and is at the bottom in the optimal ranking of the servers; and if no, performing the capacity-expanding operation on the original server which has not been subjected to the capacity-expanding operation.

2. The method of Claim 1, wherein the number of the original servers is an odd number.

3. The method of Claim 1, wherein the set number is two.

4. The method of Claim 1, wherein the configuration information of the Quorum comprises: information that is maintained by the servers in the Quorum and enables the servers in the Quorum to know each other and communicate regarding votes to elect the Leader.

5. The method of Claim 1, wherein the optimal ranking of servers for electing the Leader of the original Quorum comprises:
ranking in a top-to-bottom order from the most Leader-qualified server to the least Leader-qualified server according to a Leader election strategy of the original Quorum;

6. The method of Claim 5, wherein the step of ranking in a top-to-bottom order from the most Leader-qualified server to the least Leader-qualified server according to a Leader election strategy of the original Quorum comprises:
ranking the original server having a larger Zxid value higher among the optimal server ranking for electing the Leader of the original Quorum; or
if the original servers have the same Zxid value, ranking the original server having a smaller MyId value higher among the optimal server ranking for electing the Leader of the original Quorum.

7. The method of Claim 1, wherein before the step of starting the service process and initiating Leader election for the capacity-expanded Quorum, the following step is performed for the new server:
selecting any of the original servers, copying data of current persistent storage and transaction logs on the selected original server, and loading the copied data to a local memory database.

8. An online capacity-expanding apparatus for a Paxos protocol-based distributed consensus system, comprising:
a new server adding unit (201) configured to add a set number of new servers on the basis of original servers in an original Quorum;
a capacity-expanding unit (203) for a new server configured to trigger a capacity-expanding operation unit (204) for one of the new servers, wherein the capacity-expanding operation unit (204) comprises: a service process stopping unit (204-1) configured to stop a service process related to distributed services; a Quorum configuration information updating unit (204-3) configured to update maintained configuration information of the original Quorum to configuration information of the capacity-expanded Quorum in which the set number of new servers are added; and a service process starting unit (204-5) configured to start the service process and initiate Leader election for the capacity-expanded Quorum;
a capacity-expanding unit (205) for an original server configured to trigger, based on an optimal ranking of servers for electing the Leader of the original Quorum, the capacity-expanding operation unit (204) sequentially for each of the original servers other than the one serving as the Leader of the original Quorum, and after that, trigger the capacity-expanding operation unit (204) for the original server serving as the Leader of the original Quorum; and
a capacity-expanding unit (207) for a non-capacity-expanded new server configured to trigger the capacity-expanding operation unit (204) for the new server which has not been subjected to the capacity-expanding operation after the capacity-expanding operation unit (204) is triggered for the original servers,
wherein the capacity-expanding unit (205) for an original server comprises:
a capacity-expanding unit for an optimally-ranked non-Leader server (205-1) configured to determine an optimal ranking of servers for electing the Leader of the original Quorum currently, and trigger the capacity-expanding operation unit (204) for the original server, other than the Leader of the original Quorum, which has not been subjected to the capacity-expanding operation and is at the bottom in the optimal ranking of the servers; and
a capacity-expanding unit for an optimally-ranked Leader server (205-3) configured to judge whether the number of the original servers which have not been subjected to the capacity-expanding operation is more than two; if yes, return to trigger the capacity-expanding unit (205-1) for an optimally-ranked non-Leader server; and if no, trigger the capacity-expanding operation unit (204) for the original server which has not been subjected to the capacity-expanding operation.

9. The apparatus of Claim 8, wherein the triggering the capacity-expanding operation unit (204) for the new server comprises:
triggering the following unit before the service process starting unit is triggered:
a new server consensus data loading unit (204-4) configured to select any of the original servers, copy data of current persistent storage and transaction logs on the selected original Quorum server, and load the copied data to a local memory database.

10. An online capacity-expanding electronic device for a Paxos protocol-based distributed consensus system, comprising:
a display (301);
a processor (303); and
a memory (305) configured to store a program of an online capacity-expanding method for a distributed consensus system, wherein the program configures the processor to carry out the method of any one of claims 1 to 7.

## Patentansprüche

1. Onlinekapazitätserweiterndes computerimplementiertes Verfahren für ein auf dem Paxos-Protokoll basierendes verteiltes Konsensus-System, das Folgendes umfasst:
Hinzufügen einer festgelegten Anzahl von neuen Servern auf der Grundlage der ursprünglichen Server in einem ursprünglichen Quorum;
Durchführen einer kapazitätserweiternden Operation auf einem der neuen Server, wobei die kapazitätserweiternde Operation die folgende Schritte umfasst: Anhalten eines mit verteilten Diensten in Beziehung stehenden Dienstprozesses; Aktualisieren von aufrechterhaltenen Konfigurationsinformationen des ursprünglichen Quorums auf Konfigurationsinformationen des kapazitätserweiterten Quorums, in dem die festgelegte Anzahl neuer Server hinzugefügt wird; und Starten des Dienstprozesses und Einleiten der Leader-Wahl für das kapazitätserweiterte Quorum;
Durchführen der kapazitätserweiternden Operation auf der Grundlage einer optimalen Einstufung von Servern für das Wählen des Leaders des ursprünglichen Quorums sequentiell auf jedem der ursprünglichen Server mit Ausnahme desjenigen, der als Leader des ursprünglichen Quorums dient, und danach Durchführen der kapazitätserweiternden Operation auf dem ursprünglichen Server, der als Leader des ursprünglichen Quorums dient; und
Durchführen der kapazitätserweiternden Operation auf den neuen Servern, die nicht der kapazitätserweiternden Operation unterzogen wurden, nach Abschluss des Kapazitätserweiterns für die ursprünglichen Server,
wobei der Schritt des Durchführens der kapazitätserweiternden Operation auf der Grundlage einer optimalen Einstufung von Servern zum Wählen des Leaders des ursprünglichen Quorums sequentiell auf jedem der ursprünglichen Server außer demjenigen, der als Leader des ursprünglichen Quorums dient, der nicht der kapazitätserweiternden Operation unterzogen wurde, und des Durchführens der kapazitätserweiternden Operation auf dem ursprünglichen Server, der als Leader des ursprünglichen Quorums dient, Folgendes umfasst:
Bestimmen der optimalen Einstufung der Server für das Wählen des Leaders des ursprünglichen Quorums zum gegenwärtigen Zeitpunkt und Durchführen der kapazitätserweiternden Operation auf dem ursprünglichen Server, der nicht der kapazitätserweiternden Operation unterzogen wurde und sich in der optimalen Einstufung der Server an unterster Stelle befindet, außer dem Leader des ursprünglichen Quorums; und
Beurteilen, ob die Anzahl der ursprünglichen Server, die nicht der kapazitätserweiternden Operation unterzogen wurden, mehr als zwei beträgt; falls ja, Zurückkehren zum Durchführen des Schritts des Bestimmens einer optimalen Einstufung von Servern für das Wählen des Leaders des ursprünglichen Quorums zum gegenwärtigen Zeitpunkt und Durchführen der kapazitätserweiternden Operation auf dem ursprünglichen Server, der nicht der kapazitätserweiternden Operation unterzogen wurde und sich in der optimalen Einstufung der Server an unterster Stelle befindet, außer dem Leader des ursprünglichen Quorums; und falls nein, Durchführen der kapazitätserweiternden Operation auf dem ursprünglichen Server, der nicht der kapazitätserweiternden Operation unterzogen wurde.

2. Verfahren nach Anspruch 1, wobei die Zahl der ursprünglichen Server eine ungerade Zahl ist.

3. Verfahren nach Anspruch 1, wobei die festgelegte Zahl zwei ist.

4. Verfahren nach Anspruch 1, wobei die Konfigurationsinformationen des Quorums Folgendes umfassen: Informationen, die von den Servern im Quorum verwaltet werden und den Servern im Quorum ermöglichen, einander zu kennen und in Bezug auf Abstimmungen zum Wählen des Leaders zu kommunizieren.

5. Verfahren nach Anspruch 1, wobei die optimale Einstufung der Server für das Wählen des Leaders des ursprünglichen Quorums umfasst:
Einstufen von oben nach unten von dem am meisten zum Leader qualifizierten Server zu dem am wenigsten zum Leader qualifizierten Server gemäß einer Leader-Wahlstrategie des ursprünglichen Quorums.

6. Verfahren nach Anspruch 5, wobei der Schritt des Einstufens von oben nach unten von dem am meisten zum Leader qualifizierten Server zu dem am wenigsten zum Leader qualifizierten Server gemäß einer Leader-Wahlstrategie des ursprünglichen Quorums umfasst:
Einstufen des ursprünglichen Servers mit einem größeren Zxid-Wert höher in der optimalen Server-Einstufung für das Wählen des Leaders des ursprünglichen Quorums; oder
wenn die ursprünglichen Server denselben Zxid-Wert haben, Einstufen des ursprünglichen Servers mit dem kleineren Myld-Wert höher in der optimalen Server-Einstufung für das Wählen des Leaders des ursprünglichen Quorums.

7. Verfahren nach Anspruch 1, wobei vor dem Schritt des Startens des Dienstprozesses und des Einleitens der Leader-Wahl für das kapazitätserweiterte Quorum der folgende Schritt für den neuen Server durchgeführt wird:
Auswählen eines der ursprünglichen Server, Kopieren der Daten des aktuellen persistenten Speichers und der Transaktionsprotokolle auf dem ausgewählten ursprünglichen Server und Laden der kopierten Daten in eine Datenbank im lokalen Speicher.

8. Onlinekapazitätserweiternde Vorrichtung für ein auf dem Paxos-Protokoll basierendes verteiltes Konsensus-System, die Folgendes umfasst:
eine Einheit (201) zum Hinzufügen neuer Server, die so konfiguriert ist, dass sie eine festgelegte Anzahl neuer Server auf der Grundlage der ursprünglichen Server in einem ursprünglichen Quorum hinzufügt;
eine kapazitätserweiternde Einheit (203) für einen neuen Server, die so konfiguriert ist, dass sie eine kapazitätserweiternde Betriebseinheit (204) für einen der neuen Server auslöst, wobei die kapazitätserweiternde Betriebseinheit (204) umfasst: eine Dienstprozess-Stoppeinheit (204-1), die so konfiguriert ist, dass sie einen Dienstprozess stoppt, der sich auf verteilte Dienste bezieht; eine Quorum-Konfigurationsinformations-Aktualisierungseinheit (204-3), die so konfiguriert ist, dass sie aufrechterhaltene Konfigurationsinformationen des ursprünglichen Quorums auf Konfigurationsinformationen des kapazitätserweiterten Quorums aktualisiert, in dem die festgelegte Anzahl neuer Server hinzugefügt wird; und eine Dienstprozess-Starteinheit (204-5), die so konfiguriert ist, dass sie den Dienstprozess startet und eine Leader-Wahl für das kapazitätserweiterte Quorum einleitet;
eine kapazitätserweiternde Einheit (205) für einen ursprünglichen Server, die so konfiguriert ist, dass sie auf der Grundlage einer optimalen Einstufung von Servern zum Wählen des Leaders des ursprünglichen Quorums die kapazitätserweiternde Betriebseinheit (204) sequentiell für jeden der ursprünglichen Server auslöst, der nicht derjenige ist, der als der Leader des ursprünglichen Quorums dient, und danach die kapazitätserweiternde Betriebseinheit (204) für den ursprünglichen Server auslöst, der als der Leader des ursprünglichen Quorums dient; und
eine kapazitätserweiternde Einheit (207) für einen nicht kapazitätserweiterten neuen Server, die so konfiguriert ist, dass sie die kapazitätserweiternde Betriebseinheit (204) für den neuen Server auslöst, der nicht der kapazitätserweiternden Operation unterzogen wurde, nachdem die kapazitätserweiternde Betriebseinheit (204) für die ursprünglichen Server ausgelöst wurde,
wobei die kapazitätserweiternde Einheit (205) für einen ursprünglichen Server umfasst:
eine kapazitätserweiternde Einheit für einen optimal eingestuften Nicht-Leader-Server (205-1), die so konfiguriert ist, dass sie eine optimale Einstufung von Servern für das Wählen des Leaders des ursprünglichen Quorums aktuell bestimmt, und
Auslösen der kapazitätserweiternden Betriebseinheit (204) für den ursprünglichen Server, außer dem Leader des ursprünglichen Quorums der nicht der kapazitätserweiternden Operation unterzogen wurde und an unterster Stelle in der optimalen Einstufung der Server steht; und
eine kapazitätserweiternde Einheit für einen optimal eingestuften Leader-Server (205-3), die so konfiguriert ist, dass sie beurteilt, ob die Anzahl der ursprünglichen Server, die nicht der kapazitätserweiternden Operation unterzogen wurden, mehr als zwei beträgt; falls ja, Zurückkehren, um die kapazitätserweiternde Einheit (205-1) für einen optimal eingestuften Nicht-Leader-Server auszulösen; und falls nein, Auslösen der kapazitätserweiternden Betriebseinheit (204) für den ursprünglichen Server, der nicht der kapazitätserweiternden Operation unterzogen wurde.

9. Vorrichtung nach Anspruch 8, wobei das Auslösen der kapazitätserweiternden Betriebseinheit (204) für den neuen Server umfasst:
Auslösen der folgenden Einheit, bevor die Dienstprozess-Starteinheit ausgelöst wird:
einer Einheit (204-4) zum Laden von Konsensdaten eines neuen Servers, die so konfiguriert ist, dass sie einen der ursprünglichen Server auswählt, Daten des aktuellen nichtflüchtigen Speichers und der Transaktionsprotokolle auf dem ausgewählten ursprünglichen Quorum-Server kopiert und die kopierten Daten in eine lokale Speicherdatenbank lädt.

10. Elektronische Onlinekapazitätserweiterungsvorrichtung für ein auf dem Paxos-Protokoll basierendes verteiltes Konsensus-System, die Folgendes umfasst:
eine Anzeige (301);
einen Prozessor (303); und
einen Speicher (305), der so konfiguriert ist, dass er ein Programm eines Onlinekapazitätserweiterungsverfahrens für ein verteiltes Konsensus-System speichert, wobei das Programm den Prozessor so konfiguriert, dass er das Verfahren nach einem der Ansprüche 1 bis 7 ausführt.

## Revendications

1. Procédé informatisé d'extension de capacité en ligne pour un système de consensus distribué basé sur le protocole Paxos, comprenant :
l'ajout d'un nombre défini de nouveaux serveurs sur la base des serveurs d'origine dans un quorum d'origine ;
l'exécution d'une opération d'extension de capacité sur l'un des nouveaux serveurs, dans lequel l'opération d'extension de capacité comprend les étapes suivantes : arrêt d'un processus de service relatif à des services distribués ; mise à jour des informations de configuration conservées du quorum d'origine vers les informations de configuration du quorum à capacité étendue dans lequel le nombre défini de nouveaux serveurs est ajouté ; et démarrage du processus de service et lancement de l'élection du chef pour le quorum à capacité étendue ;
l'exécution, sur la base d'un classement optimal de serveurs pour élire le chef du quorum d'origine, de l'opération d'extension de capacité de manière séquentielle sur chacun des serveurs d'origine autres que celui servant de chef du quorum d'origine, et ensuite, l'exécution de l'opération d'extension de capacité sur le serveur d'origine servant de chef du quorum d'origine ; et
l'exécution de l'opération d'extension de capacité sur les nouveaux serveurs qui n'ont pas été soumis à l'opération d'extension de capacité après l'achèvement de l'extension de capacité pour les serveurs d'origine,
dans lequel l'étape d'exécution, sur la base d'un classement optimal de serveurs pour élire le chef du quorum d'origine, de l'opération d'extension de capacité de manière séquentielle sur chacun des serveurs d'origine autres que celui servant de chef du quorum d'origine qui n'a pas été soumis à l'opération d'extension de capacité et d'exécution de l'opération d'extension de capacité sur le serveur d'origine servant de chef du quorum d'origine comprend :
la détermination du classement optimal des serveurs pour élire le chef du quorum d'origine actuellement, et l'exécution de l'opération d'extension de capacité sur le serveur d'origine, autre que le chef du quorum d'origine, qui n'a pas été soumis à l'opération d'extension de capacité et qui se situe en bas du classement optimal des serveurs ; et
l'évaluation si le nombre de serveurs d'origine qui n'ont pas été soumis à l'opération d'extension de capacité est supérieur à deux ; si tel est le cas, le retour à l'étape de détermination d'un classement optimal de serveurs pour élire le chef du quorum d'origine actuellement, et l'exécution de l'opération d'extension de capacité sur le serveur d'origine, autre que le chef du quorum d'origine, qui n'a pas été soumis à l'opération d'extension de capacité et qui se situe en bas du classement optimal des serveurs ; et si ce n'est pas le cas, l'exécution de l'opération d'extension de capacité sur le serveur d'origine qui n'a pas été soumis à l'opération d'extension de capacité.

2. Procédé selon la revendication 1, dans lequel le nombre de serveurs d'origine est un nombre impair.

3. Procédé selon la revendication 1, dans lequel le nombre défini est deux.

4. Procédé selon la revendication 1, dans lequel les informations de configuration du quorum comprennent : des informations qui sont conservées par les serveurs dans le quorum et permettent aux serveurs dans le quorum de se connaître les uns les autres et de communiquer concernant les votes pour élire le chef.

5. Procédé selon la revendication 1, dans lequel le classement optimal des serveurs pour élire le chef du quorum d'origine comprend :
le classement dans un ordre de haut en bas, du serveur le plus qualifié au rang de chef au serveur le moins qualifié au rang de chef selon une stratégie d'élection de chef du quorum d'origine.

6. Procédé selon la revendication 5, dans lequel l'étape de classement dans un ordre de haut en bas depuis le serveur le plus qualifié au rang de chef au serveur le moins qualifié au rang de chef selon une stratégie d'élection de chef du quorum d'origine comprend :
le classement du serveur d'origine comportant une valeur Zxid plus grande parmi le classement de serveur optimal pour élire le chef du quorum d'origine ; ou
si les serveurs d'origine ont la même valeur Zxid, le classement du serveur d'origine comportant une valeur Myld plus petite parmi le classement de serveur optimal pour élire le chef du quorum d'origine.

7. Procédé selon la revendication 1, dans lequel avant l'étape de démarrage du processus de service et de lancement de l'élection du chef pour le quorum à capacité étendue, l'étape suivante est effectuée pour le nouveau serveur :
La sélection de l'un quelconque des serveurs d'origine, la copie des données du stockage persistant actuel et des journaux de transactions sur le serveur d'origine sélectionné, et le chargement des données copiées dans une base de données de mémoire locale.

8. Appareil d'extension de capacité en ligne pour un système de consensus distribué basé sur le protocole Paxos, comprenant :
une unité d'ajout de nouveaux serveurs (201) configurée pour ajouter un nombre défini de nouveaux serveurs sur la base de serveurs d'origine dans un quorum d'origine ;
une unité d'extension de capacité (203) pour un nouveau serveur configurée pour déclencher une unité d'opération d'extension de capacité (204) pour l'un des nouveaux serveurs, dans lequel l'unité d'opération d'extension de capacité (204) comprend : une unité d'arrêt de processus de service (204-1) configurée pour arrêter un processus de service relatif aux services distribués ; une unité de mise à jour d'informations de configuration de quorum (204-3) configurée pour mettre à jour les informations de configuration conservées du quorum d'origine vers les informations de configuration du quorum à capacité étendue dans lequel le nombre défini de nouveaux serveurs est ajouté ; et une unité de démarrage de processus de service (204-5) configurée pour démarrer le processus de service et lancer l'élection du chef pour le quorum à capacité étendue ;
une unité d'extension de capacité (205) pour un serveur d'origine configurée pour déclencher, sur la base d'un classement optimal de serveurs pour élire le chef du quorum d'origine, l'unité d'opération d'extension de capacité (204) séquentiellement pour chacun des serveurs d'origine autres que celui servant de chef du quorum d'origine, puis déclencher l'unité d'opération d'extension de capacité (204) pour le serveur d'origine servant de chef du quorum d'origine ; et
une unité d'extension de capacité (207) pour un nouveau serveur sans extension de capacité, configurée pour déclencher l'unité d'opération d'extension de capacité (204) pour le nouveau serveur qui n'a pas été soumis à l'opération d'extension de capacité après que l'unité d'opération d'extension de capacité (204) a été déclenchée pour les serveurs d'origine,
dans lequel l'unité d'extension de capacité (205) pour un serveur d'origine comprend :
une unité d'extension de capacité pour un serveur non-chef classé de manière optimale (205-1) configurée pour déterminer un classement optimal de serveurs pour élire le chef du quorum d'origine actuellement, et déclencher l'unité d'opération d'extension de capacité (204) pour le serveur d'origine, autre que le chef du quorum d'origine, qui n'a pas été soumis à l'opération d'extension de capacité et se situe en bas du classement optimal des serveurs ; et
une unité d'extension de capacité pour un serveur chef classé de manière optimale (205-3) configurée pour évaluer si le nombre de serveurs d'origine qui n'ont pas été soumis à l'opération d'extension de capacité est supérieur à deux ; si tel est le cas, revenir pour déclencher l'unité d'extension de capacité (205-1) pour un serveur non-chef classé de manière optimale ; et si ce n'est pas le cas, déclencher l'unité d'opération d'extension de capacité (204) pour le serveur d'origine qui n'a pas été soumis à l'opération d'extension de capacité.

9. Appareil selon la revendication 8, dans lequel le déclenchement l'unité d'opération d'extension de capacité (204) pour le nouveau serveur comprend :
le déclenchement de l'unité suivante avant le déclenchement de l'unité de démarrage du processus de service :
une unité de chargement de données de consensus sur les nouveaux serveurs (204-4) configurée pour sélectionner l'un quelconque des serveurs d'origine, copier les données de stockage persistant actuel et les journaux de transactions sur le serveur quorum d'origine sélectionné, et charger les données copiées dans une base de données de mémoire locale.

10. Dispositif électronique d'extension de capacité en ligne pour un système de consensus distribué basé sur le protocole Paxos, comprenant :
un affichage (301) ;
un processeur (303) ; et
une mémoire (305) configurée pour stocker un programme d'un procédé d'extension de capacité en ligne pour un système de consensus distribué, dans lequel le programme configure le processeur pour exécuter le procédé selon l'une quelconque des revendications 1 à 7.
